# EUROPÄISCHE PATENTSCHRIFT

(11) **EP 1 326 757 B1**
(45) Veröffentlichungstag und Bekanntmachung des Hinweises auf die Patenterteilung: **06.06.2007**
(21) Anmeldenummer: 01986646.6
(22) Anmeldetag: 09.10.2001
(51) Int. Cl.: B60J 5/04

(54) **TÜRMODULTRÄGER**
DOOR MODULE SUPPORT
SUPPORT POUR LA REALISATION D'UN MODULE DE PORTIERE

(30) Priorität: 10.10.2000 DE 10050322
(43) Veröffentlichungstag der Anmeldung: 16.07.2003
(60) Teilanmeldung: 07090015.4
(73) Patentinhaber: Brose Fahrzeugteile GmbH & Co. KG, Coburg, 96450 Coburg (DE); Visteon Global Technologies, Inc., Dearborn, Michigan 48126 (US)
(72) Erfinder: REUL, Dennis, 96274 Schottenstein (DE); FLORENTIN, Thierry, 96450 Coburg (DE); STELANDRE, Bertrand, F-59242 Capelle-en-Pevele (FR); LECONTE, Herve, F-59554 Bantigny (FR)
(74) Vertreter: Baumgärtel, Gunnar
(86) Internationale Anmeldenummer: PCT/DE2001/003872
(87) Internationale Veröffentlichungsnummer: WO 2002/030695

(56) Entgegenhaltungen:
- US-A- 5 802 770
- US-A- 5 902 004
- US-A- 5 906 072

## Beschreibung

Die Erfindung betrifft einen Türmodulträger nach dem Oberbegriff des Patentanspruchs 1.

Ein derartiger Türmodulträger dient zur .Befestigung an einem Türkörper, z.B. an der Türinnenhaut einer Kraftfahrzeugtür, zwischen dem Nassraum und dem Trockenraum eines Fahrzeugs und wird durch eine Trägerplatte gebildet, die eine Vielzahl unterschiedlicher Funktionselemente einer Fahrzeugtür, wie z.B. einen Fensterheber, ein Türschloss, einen Türgriff, Kabelstränge sowie eine Türinnenverkleidung aufnehmen kann. Diese Funktionselemente können mit dem Türmodulträger zu einer vormontierten, vorprüfbaren Baugruppe (Türmodul) zusammengefasst werden, die als Ganzes an dem Türkörper einer Fahrzeugtür befestigt wird.

Hierfür weist der Türmodulträger erste Befestigungsstellen auf, die zur Befestigung der Trägerplatte an dem genannten Türkörper dienen, wobei im befestigten Zustand eine Oberfläche der Trägerplatte dem Trockenraum und die andere Oberfläche der Trägerplatte dem Nassraum des Fahrzeugs zugewandt ist. Die Trägerplatte liegt dabei an dem Türkörper mit einer (regelmäßig im Bereich ihres Randes) umlaufenden Dichtungskontur an, so dass eine flüssigkeitsdichte Trennung zwischen dem Nassraum und dem Trockenraum der Fahrzeugtür gewährleistet wird. Die Trägerplatte kann dabei insbesondere über eine umlaufende Dichtraupe oder vergleichbare Dichtelemente an dem Türkörper anliegen.

Darüber hinaus weist die Trägerplatte zweite Befestigungsstellen auf, die zur Befestigung der vorstehend genannten Funktionselemente an der Trägerplatte vorgesehen sind.

Ein derartiger Türmodulträger ist beispielsweise aus der WO 96/28314 bekannt.

Auch aus der gattungsgemäßen US-PS 5,902,004 ist ein Türmodulträger bekannt, der eine Befestigungstelle zur Befestigung eines Schlossträgers an dem Türmodulträger aufweist, die jenseits einer Dichtkontur des Türmodulträger angeordnet ist. Die Befestigungsstellen sind dabei für eine Schraubverbindung vorgesehen.

Der Erfindung liegt die Aufgabe zugrunde, einen Türmodulträger der eingangs genannten Art weiter zu verbessern, insbesondere im Hinblick auf die Befestigung der Funktionselemente an dem Türmodulträger.

Diese Aufgabe wird erfindungsgemäß durch die Schaffung eines Türmodulträgers mit den Merkmalen des Patentanspruchs 1 gelöst.

Danach sind die zweiten Befestigungsstellen an mindestens einem Befestigungsbereich vorgesehen, der außerhalb des von der Dichtungskontur umgebenen Abschnittes der Trägerplatte an dieser angeformt ist und der in den Trockenraum des Fahrzeugs ragt.

Die Befestigungsstellen sind dabeiderart ausgebildet, daß die Verbindung mit einem an der Trägerplatte zu befestigenden Funktionselement über einen Befestigungshaken erfolgen kann.

Durch die erfindungsgemäße Anordnung von Befestigungsstellen an Befestigungsbereichen, die außerhalb der Dichtungskontur der Trägerplatte im Trockenraum liegen, wird erreicht, dass diese Befestigungsstellen (die häufig durch Befestigungsöffnungen gebildet werden) die Nass-/Trockenraum-Trennung nicht beeinträchtigen. Insbesondere ist es nicht erforderlich, im Bereich der genannten Befestigungsstellen zusätzliche Maßnahmen zur Abdichtung des Trockenraumes gegenüber dem Nassraum vorzusehen.

Die erfindungsgemäße Anordnung der Befestigungsstellen ist für unterschiedliche Funktionselemente, die an dem Türmodulträger befestigt werden sollen, verwendbar, z.B. für Kabelstränge, Türgriffe und/oder Teile des Schließsystems. Besonders vorteilhaft ist jedoch die Verwendung bei der Befestigung einer Türinnenverkleidung an dem Türmodulträger.

Je nach Verwendungszweck können die Befestigungsbereiche an unterschiedlichen Stellen der Trägerplatte angeformt sein und auch in unterschiedlichen Richtungen von der Trägerplatte abstehen, beispielsweise in der durch die Trägerplatte definierten Ebene oder auch aus dieser Ebene heraus.

Darüber hinaus kann vorgesehen sein, dass die Befestigungsbereiche, die außerhalb der Dichtungskontur an der Trägerplatte angeformt sind, nach innen über die Trägerplatte geführt sind, wenn dies für den jeweiligen Befestigungszweck vorteilhaft ist. Bei aus Blech bestehenden Trägerplatten können die Befestigungsbereiche hierzu nach innen umgebogen sein. Besteht die Trägerplatte demgegenüber aus Kunststoff, so kann hierfür ein Scharnier vorgesehen sein oder der entsprechende Befestigungsbereich ist unmittelbar derart geformt, dass er sich von außerhalb der Dichtungskontur nach innen über die Trägerplatte erstreckt.

Eine gewisse Elastizität der Befestigungsbereiche ermöglicht einen Toleranzausgleich bei der Fixierung der Türinnenverkleidung relativ zu dem Türmodulträger.

Der Befestigungshaken greift in eine zugeordnete Befestigungsöffnung ein, wobei an den Befestigungsbereichen wahlweise die Befestigungsöffnungen oder die Befestigungshaken vorgesehen sein können. An dem zugehörigen Funktionselement befindet sich dann jeweils mindestens ein Befestigungselement vom anderen Typ.

Wenn die Trägerplatte oder das Funktionselement aus Kunststoff bestehen, können die Befestigungshaken hieran in einfacher Weise einstückig angeformt sein.

Die Verwendung von Befestigungshaken zur Befestigung von Funktionselementen an der Trägerplatte hat gegenüber üblichen Befestigungsmitteln, wie z.B. Clipsen, Schraubverbindungen oder Nietverbindungen, den Vorteil, dass bei Montage oder Transport keine Befestigungsmittel verloren gehen können (wie z.B. im Fall von Schraub- oder Nietverbindungen) und dass auch keine besondere Gefahr des Abbrechens von Befestigungsmitteln (wie z.B. im Fall federnder Clipse) besteht.

Die Befestigungsöffnungen werden vorzugsweise durch Schlitze gebildet, in die die Befestigungshaken einführbar sind und in denen die Befestigungshaken in Schlitzlängsrichtung verschiebbar sind.

Hierbei können mehrere zur Befestigung eines Funktionselementes vorgesehene Befestigungsöffnungen (Schlitze) parallel verlaufen, so dass zur Montage des entsprechenden Funktionselementes die jeweiligen Befestigungshaken in die zugeordneten Schlitze eingefädelt werden und dann entlang der Längsrichtung der Schlitze in ihre Endposition (Funktionsposition) verschoben werden.

Gemäß einer Ausführungsform der Erfindung, die insbesondere zur Befestigung einer Türinnenverkleidung an dem Türmodulträger verwendet werden kann, verlaufen die Schlitze im wesentlichen in vertikaler Richtung (entlang der Fahrzeug-z-Achse), wenn der Türmodulträger an dem Türkörper befestigt ist. Diese Art der Befestigung einer Türinnenverkleidung an einem Türmodulträger ist besonders vorteilhaft im Hinblick auf die Auslegung der Fahrzeugtür für einen eventuellen Seitenaufprall (Seiten-Crash).

Zur Fixierung einer Türinnenverkleidung an dem Türmodulträger können zusätzlich zu den in z-Richtung verlaufenden Schlitzen noch weitere Befestigungsstellen an Befestigungsbereichen vorgesehen sein, die an der Unterseite des Türmodulträgers angeformt sind und im wesentlichen quer von diesem abstehen.

Weitere Merkmale und Vorteile der Erfindung werden bei der nachfolgenden Beschreibung eines Ausführungsbeispiels anhand der Figuren deutlich werden.

Es zeigen:
- Figur 1 -: einen Türmodulträger, der an dem Türkörper einer Kraftfahrzeugtür befestigbar ist und zur Aufnahme verschiedener Funktionselemente der Fahrzeugtür dient;
- Figur 2a-: einen Ausschnitt des Türmodulträgers aus Figur 1 im Bereich einer Befestigungsstelle, über die eine Türinnenverkleidung an dem Türmodulträger befestigt ist;
- Figur 2b -: einen weiteren Ausschnitt des Türmodulträgers aus Figur 1 im Bereich einer Befestigungsstelle, über die die Türinnenverkleidung an dem Türmodulträger befestigt ist;
- Figur 3 -: eine Abwandlung des Türmodulträgers aus Figur 1;
- Figur 4a -: einen Ausschnitt einer weiteren Abwandlung des Türmodulträgers aus Figur 1 im Bereich einer Befestigungsstelle, über die eine Türinnenverkleidung an dem Türmodulträger befestigt ist;
- Figur 4b -: eine Schnittdarstellung des Auschnittes aus Fig. 4a;
- Figur 5-: eine schematische Darstellung einer Fahrzeugtür mit einem Türmodulträger.

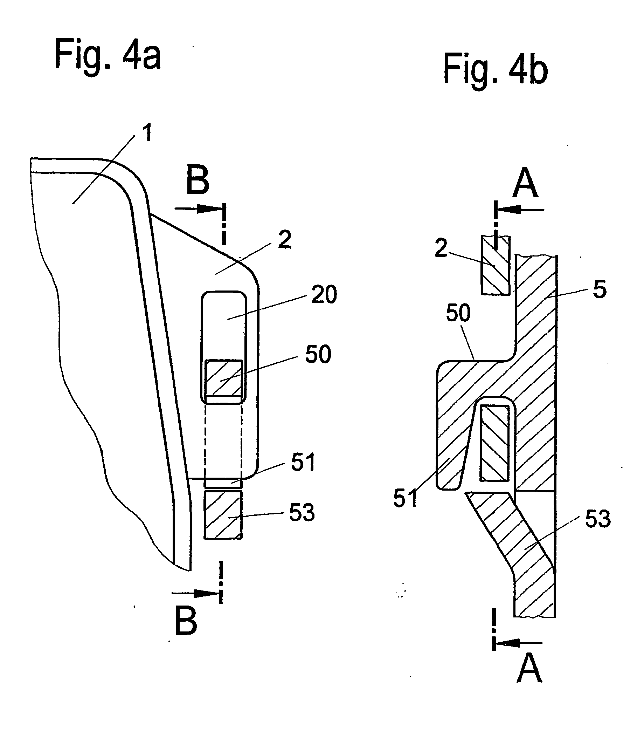

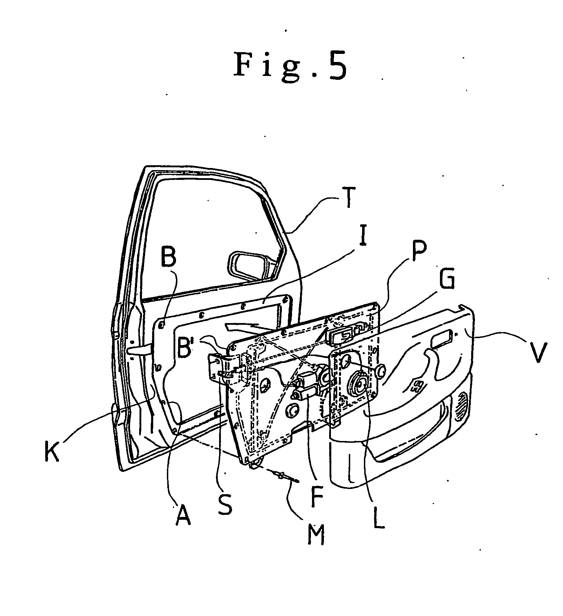

Fig. 5 zeigt eine Kraftfahrzeugtür T mit einem Türkörper K, dessen Innenhaut 1 (z.B. Innenblech) eine großflächige Aussparung A aufweist, die mit einer Trägerplatte P eines Türmodules abgedeckt ist. Die Trägerplatte P ist über Befestigungsstellen B, B' der Türinnenhaut I einerseits und der Trägerplatte P andererseits und über zugeordnete Befestigungsmittel M mit der Türinnenhaut I verbunden. Die Trägerplatte P trägt z.B. einen Fensterheber F, einen Türbetätigungsgriff G, einen Lautsprecher L und eine Türschloß S, wodurch ein vormontierbares und vorprüfbares Türmodul gebildet wird. Dieses Ensemble wird nach Innen abgedeckt durch eine Türinnenverkleidung V, die in Fig. 4 durchscheinend gezeichnet ist und die in nicht näher dargestellter Weise mit der Tür T, z.B. mit der Trägerplatte P, verbunden wird.

Die Türinnenhaut I und die daran befestigte Trägerplatte P bilden eine Trennwand, durch die der Naßraum der Tür vom Trockenraum des Fahrzeugs getrennt ist.

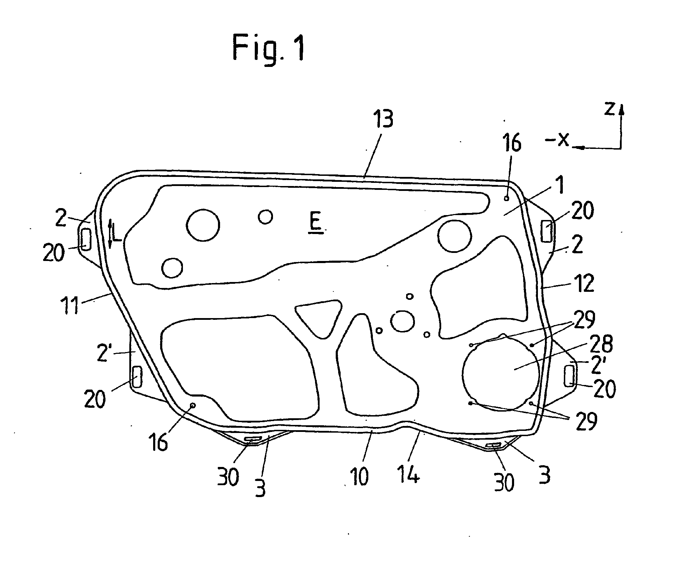

In Figur 1 ist ein erfindungsgemäß gestalteter Türmodulträger dargestellt mit einer Trägerplatte 1, die zur Aufnahme unterschiedlicher Funktionskomponenten einer Fahrzeugtür, wie z.B. eines Fensterhebers, eines Türschlosses, eines Lautsprechers (ggf. separater Hoch- und Tieftöner), eines Türgriffs, Teilen des Schließsystems, eines Airbagmodules, einer Beleuchtung, von Kabelsträngen sowie einer Türinnenverkleidung dienen kann.

Die Trägerplatte 1 ist mittels erster Befestigungsstellen 16, von denen in Figur 1 nur zwei beispielhaft dargestellt sind, an dem Türkörper einer Fahrzeugtür befestigbar, insbesondere an deren Innenhaut, und bildet dort einen Bestandteil einer Trennwand, die den Nassraum vom Trockenraum des Fahrzeugs trennt. Um hier eine dichtende Trennung zu gewährleisten, weist die Trägerplatte eine umlaufende Dichtungskontur 10 auf, entlang der die die Trägerplatte 1 an dem Türkörper anliegt, z.B. über eine entlang der Dichtungskontur 10 verlaufende Dichtraupe, so dass eine feuchtigkeitsdichte Anlage der Trägerplatte 1 an dem Türkörper gewährleistet wird.

Neben den bereits erwähnten ersten Befestigungsstellen 16, die zur Befestigung der Trägerplatte 1 an einem Türkörper dienen, weist die Trägerplatte 1 noch eine Vielzahl weiterer Befestigungsöffnungen sowie Aufnahmeöffnungen für Funktionselemente einer Fahrzeugtür auf. Beispielhaft sei hier eine Aufnahme 28 für einen Lautsprecher erwähnt, die von vier Befestigungsstellen 29 zur Befestigung des Lautsprechers an der Trägerplatte 1 umgeben ist.

Ausserhalb der Dichtungskontur 10 sind an der Trägerplatte 1 insgesamt sechs Befestigungsbereiche 2, 2', 3 angeformt, die zur Befestigung einer Türinnenverkleidung an der Trägerplatte 1 dienen. Dabei sind vier Befestigungsbereiche 2, 2'einander paarweise gegenüberliegend an den beiden in Fahrzeuglängsrichtung x (bezogen auf die Orientierung der Trägerplatte 1 in dem Zustand, in dem sie in eine Fahrzeugtür eingebaut ist) voneinander beabstandeten Stirnseiten 11, 12 der Trägerplatte 1 (d.h. zwischen deren Oberkante 13 und Unterkante 14) angeformt. Diese Befestigungsbereiche stehen dabei jeweils in der durch die Trägerplatte 1 defenierten Ebene E von dieser ab. Jeder dieser Befestigungsbereiche 2, 2' weist eine Befestigungsöffnung 20 in Form eines Schlitzes auf, der sich in einer Richtung L parallel zur vertikalen Fahrzeugachse (z-Achse) erstreckt. Diese Schlitze 20 sind derart ausgebildet, dass sie zur Aufnahme eines Hakens zum Zwecke der Befestigung dienen können.

Zwei weitere Befestigungsbereiche 3 sind an der Unterkante 14 der Trägerplatte 1 angeformt und stehen im Wesentlichen senkrecht von dieser ab, und zwar in Richtung auf den Trockenraum (bezogen auf den Zustand, in dem die Trägerplatte in eine Fahrzeugtür eingebaut ist). Jeder dieser Befestigungsbereiche 3 weist Befestigungsöffnungen 30 auf, in die ein Vorsprung der Innenverkleidung zum Zwecke der Fixierung der Türinnenverkleidung an der Trägerplatte 1 eindringen kann.

Sämtliche außerhalb der Dichtungskontur vorgesehene Befestigungsbereiche 2, 2', 3 erstrecken sich dabei vollständig im Trockenraum T (vergleiche Figur 2a) eines Fahrzeugs.

Figur 2a zeigt einen Ausschnitt aus dem Türmodulträger gemäß Figur 1 im Bereich eines Befestigungsbereiches 2 sowie des zugehörigen Schlitzes 20 im Querschnitt. Weiterhin ist in Figur 2a erkennbar ein Teil des Türkörpers, genauer: ein Teil der Türinnenhaut I, an der die Trägerplatte 1 befestigt ist. Die Trägerplatte überdeckt hierbei üblicherweise einen großflächigen Ausschnitt in der Innenhaut I, dessen Form an die Form der Trägerplatte 1 angepaßt ist. Die Türinnenhaut I und die Trägerplatte 1 bilden zusammen eine Trennwand, durch die der Trockenraum T des Fahrzeugs von dem Nassraum N getrennt wird. Der Nassraum wird dabei gebildet durch diejenigen Teile der Tür, die sich nach außen hin an die durch die Innenhaut I und die Trägerplatte 1 gebildete Trennwand anschließen, während der Trockenraum T auf der dem Fahrzeuginnenraum zugewandten Seite der besagten Trennwand liegt.

Ferner ist in Figur 2a dargestellt ein Teil einer Türinnenverkleidung 5, die an der Trägerplatte 1 befestigt ist, und zwar über Haken 50, die in die Schlitze 20 der Befestigungsbereiche 2 eingreifen. Hierbei hintergreift der Haken 50 mit einem abgewinkeltem Endabschnitt 51 den unteres Rand des Schlitzes 20, so dass der untere Rand des Schlitzes 20 in eine an das abgewinkelte Ende 51 anschließende Ausnehmung 52 des Hakens 50 eingreift. In entsprechender Weise greifen auch an den anderen Befestigungsbereichen 2, 2'jeweils Haken 50 der Türinnenverkleidung 5 in die an den Befestigungsbereichen 2, 2'vorgesehenen Schlitze 20 ein.

Es ist erkennbar, dass der Haken 50 in dem Schlitz 20 in Schlitzlängrichtung L parallel zur z-Achse verschiebbar ist. Hierdurch läßt sich die Verbindung zwischen der Türinnenverkleidung und der Trägerplatte 1 lösen, indem die Türinnenverkleidung 5 zusammen mit dem einstückig angeformten Haken 50 entlang der z-Achse nach oben verschoben wird und dann in Richtung des Trockenraumes T von der Trägerplatte 1 abgenommem wird.

Die Erstreckungsrichtung L der Schlitze 20 kann eine Komponente in Fahrzeuglängsrichtung x aufweisen, wodurch eine spielfreie Montage der Türinnenverkleidung in der Fahrzeugtür erleichtert wird, da die Türinnenverkleidung 5 bei der Montage zugleich eine Bewegung in Fahrzeuglängsrichtung x ausführen kann und dabei gegen eine Stirnseite der Tür gedrückt wird.

Die Haken 50 und die zugehörigen Schlitze 20 sind im übrigen allgemein zur Befestigung von Funktionsgruppen an einer Fahrzeugtür vorteilhaft geeignet, also auch dann, wenn die Befestigungsstellen innerhalb und nicht außerhalb der Dichtungskontur 10 liegen.

In Figur 2a ist schließlich auch noch das obere Ende der Türinnenverkleidung 5 dargestellt, das einen abgewinkelten Endabschnitt 59 aufweist, der ein Einhängen der Tüinnenverkleidung im Bereich der Türbrüstung ermöglicht.

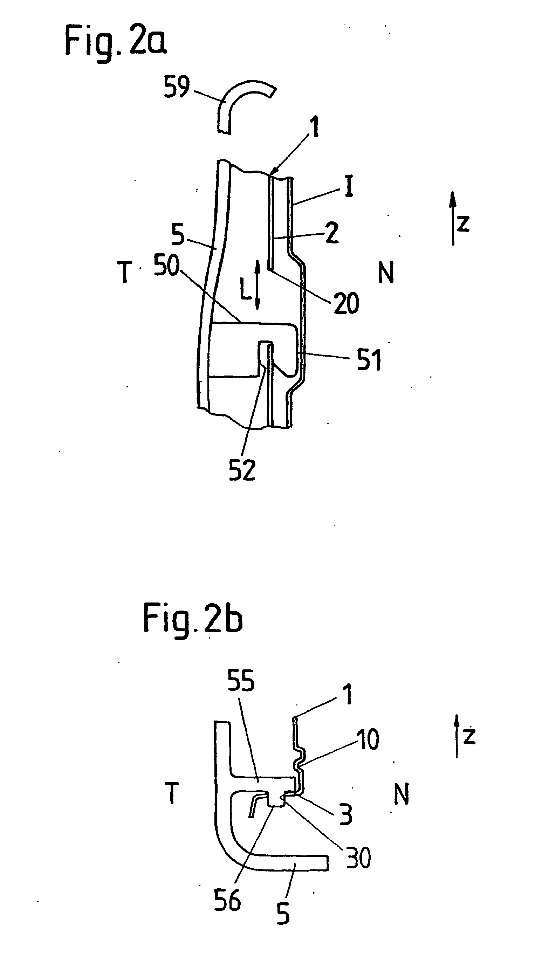

Figur 2b zeigt in einem Querschnitt einen Ausschnitt der Trägerplatte 1 gemäß Figur 1 im Bereich eines Befestigungsbereiches 3 der unterhalb der Dichtungskontur 10 in Richtung auf den Trockenraum T senkrecht von der Trägerplatte 1 absteht. Die Türinnenverkleidung 5 weist in ihrem unteren Endabschnitt einen in Richtung auf die Trägerplatte 1 abgewinkelten Abschnitt 55 mit einem nach unten (entgegen der z-Richtung) abstehenden Vorsprung 56 auf, der in die Befestigungsöffnung 30 (vergleiche Figur 1) des Befestigungsbereiches 3 einschiebbar ist. Hierdurch erfolgt eine zusätzliche Fixierung der Türinnenverkleidung 5 an der Trägerplatte 1 im Bereich ihres unteren Endes. Auch diese Verbindung läßt sich durch Verschieben der Türinnenverkleidung 5 nach oben entlang der z-Richtung lösen.

Es kann vorgesehen sind, dass die Türinnenverkleidung 5 vor dem Einbau in eine Fahrzeugtür zunächst schwimmend auf der Trägerplatte 1 gelagert wird, z.B. indem zunächst lediglich Haken 50 der Türinnenverkleidung 5 in die Schlitze 20 der seitlichen Befestigungsbereiche 2 und/oder 2' der Trägerplatte 1 eingreifen und noch keine zusätzliche Befestigung über die untereren Befestigungsbereiche 3 der Trägerplatte 1 erfolgt. Gegebenenfalls kann stattdessen in diesem Bereich eine provisorische Verbindung zwischen Türinnenverkleidung 5 und Trägerplatte 1 vorgesehen sein, die der schwimmenen Lagerung nicht entgegensteht.

Die Trägerplatte 1 und die Türinnenverkleidung 5 können dann als separate, vorgefertigte und gegebenenfalls mit weiteren Komponenten bestückte Module bereitgestellt und zunächst schwimmend miteinander verbunden werden. Erst bei der Montage und Ausrichtung dieser beiden Komponenten in einer Fahrzeugtür erfolgt deren endgültige Befestigung über sämtlich Befestigungsbereiche 2, 2', 3.

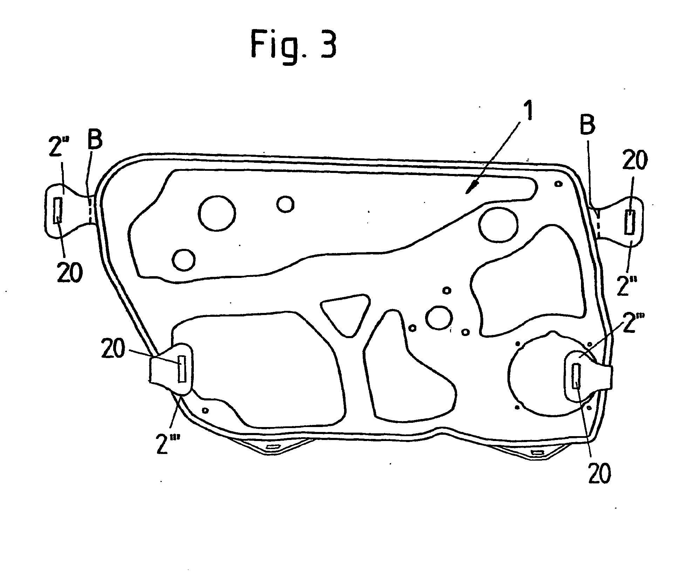

Figur 3 zeigt eine Abwandlung des Ausführungsbeispiels aus Figur 1, wobei die Unterschiede lediglich in der Ausgestaltung der an der Trägerplatte 1 angeformten seitlichen Befestigungsbereiche liegen. Diese Befestigungsbereiche 2", 2"'weisen jeweils eine Biegekante B auf, um die sie nach innen über die Trägerplatte 1 biegbar sind. Dabei sind in Figur 3 die oberen seitlichen Befestigungsbereiche 2"vor dem nach innen Biegen und die unteren seitlichen Befestigungsbereich 2'" nach dem nach innen Biegen dargestellt Auch diese Befestigungsbereiche 2', 2"'weisen jeweils Befestigungsöffnungen in Form von Schlitzen 20 auf, die in entsprechender Weise wie bei dem in den Figuren 1 und 2 dargestelltem Ausführungsbeispiel zur Aufnahme einer Türinnenverkleidung dienen.

Wird an Stelle eines üblichen Türmodulträgers aus Metall ein Türmodulträger aus Kunststoff verwendet, so können an Stelle der Biegebereiche B Scharniere, z.B. Filmscharniere, vorgesehen sein, um das Umklappen der Befestigungsbereiche nach innen zu ermöglichen.

Die Figuren 4a und 4b zeigen einen Ausschnitt einer Abwandlung des Türmodulträgers gemäß Figur 1 im Bereich eines Befestigungsbereiches 2 sowie des zugehörigen Schlitzes 20. Hierbei weist die Türinnenverkleidung 5 im Bereich des Hakens 50 zusätzlich ein einstückig angeformtes, von der Türinnenverkleidung 5 abstehendes elastisches Schnappelement 53 auf, das beim Einführen des Hakens 50 in den Schlitz 20 durch die Trägerplatte 1 seitlich weggedrückt wird und das nach dem Einführen des Hakens 50 in den Schlitz 20 den Haken 50 gegen ein Herausrutschen aus dem Schlitz 20 sichert. Zum Ausfädeln des Hakens 50 aus dem Schlitz 20 muß dieses Schnappelement 53 zunächst mittels eines geeigneten Werkzeuges betätigt (seitlich weggedrückt) werden.

Die in den Figuren 1 bis 4b dargestellten Befestigungsbereiche und die zugehörigen Schlitze können auch weitere Funktionen als Transporthilfen, als Griff-Laschen oder als Referenzpunkte bei der Montage übernehmen.

Ferner können bei den in den Figuren 1 bis 4b dargestellten Ausführungsbeispielen auch jeweils die Haken an den Befestigungsabschnitten der Trägerplatte und die Schlitze an der Türinnenverkleidung vorgesehen sein. Dies ist insbesondere dann vorteilhaft, wenn die Trägerplatte 1 aus Kunststoff besteht.

Außerdem können an den Befestigungsbereichen noch zusätzliche Bauelemente befestigt sein, die bei der Montage benötigt werden und anschließend abbrechbar sein.

Schließlich kann der Teil des Trockenraumes T der Fahrzeugtür, der sich zwischen der Trägerplatte 1 und der Türinnenverkleidung 5 erstreckt, als/für ein Ablagefach genutzt werden.

## Patentansprüche

1. Türmodulträger zur Befestigung an einem Türkörper zwischen dem Nassraum und dem Trockenraum eines Kraftfahrzeugs mit
- einer Trägerplatte (1) zur Aufnahme von Funktionselementen einer Fahrzeugtür, z.B. eines Fensterhebers, eines Türschlosses, eines Tür griffes und/oder einer Türinnenverkleidung,
- ersten Befestigungsstellen (16) der Trägerplatte (1), die zur Befestigung der Trägerplatte an dem Türkörper dienen, wobei im montierten Zustand eine Oberfläche der Trägerplatte (1) dem Trockenraum (T) und die andere Oberfläche der Trägerplatte (1) dem Nassraum (N) zugewandt ist,
- einer an der Trägerplatte (1) umlaufenden Dichtungskontur (10), entlang der die Trägerplatte (1) sich im montierten Zustand dichtend an den Türkörper legt, und
- zweiten Befestigungsstellen (20, 30) der Trägerplatte (1), die zur Befestigung mindestens eines Funktionselementes (I) an der Trägerplatte (1) dienen und die an Befestigungsbereichen (2, 2', 2", 2"',3) vorgesehen sind, die außerhalb des von der Dichtungskontur (10) umgebenen Abschnittes der Trägerplatte 1 an diese angeformt sind und die in den Trockenraum (T) ragen,
**dadurch gekennzeichnet,**
**dass** die zweiten Befestigungsstellen (20, 30) als zur Aufnahme von Befestigungshaken (50) eingerichtete Befestigungsöffnungen ausgebildet sind.

2. Türmodulträger nach Anspruch 1, **dadurch gekennzeichnet, dass** Befestigungsbereiche (2, 2') vorgesehen sind, die in der durch die Trägerplatte (1) definierten Ebene (E) von der Trägerplatte (1) abstehen.

3. Türmodulträger nach Anspruch 1 oder 2, **dadurch gekennzeichnet, dass** Befestigungsbereiche (3) vorgesehen sind, die winklig, insbesondere senkrecht, zu der durch die Trägerplatte (1) definierten Ebene (E) von der Trägerplatte (1) abstehen.

4. Türmodulträger nach einem der vorhergehenden Ansprüche, **dadurch gekennzeichnet, dass** Befestigungsbereiche (2", 2"') vorgesehen sind, die außerhalb der Dichtungskontur (10) an der Trägerplatte (1) angeformt sind und nach innen über die Trägerplatte (1) geführt sind.

5. Türmodulträger nach einem der vorhergehenden Ansprüche, **dadurch gekennzeichnet, dass** die an den Befestigungsbereichen (2, 2', 2", 2"', 3) vorgesehenen zweiten Befestigungsstellen (20, 30) durch Befestigungsöffnungen gebildet werden.

6. Türmodulträger nach einem der Ansprüche 1 bis 4, **dadurch gekennzeichnet, dass** die an den Befestigungsbereichen vorgesehenen zweiten Befestigungsstellen durch Befestigungshaken gebildet werden, die in Befestigungsöffnungen eines an der Trägerplatte (1) zu befestigenden Funktionselementes (5) einführbar sind.

7. Türmodulträger nach Anspruch 6, **dadurch gekennzeichnet dass** die Befestigungsöffnungen (20) durch Schlitze gebildet werden, in die die Befestigungshaken (5) einführbar sind und in denen die Befestigungshaken (50) in Schlitzlängsrichtung (L) verschiebbar sind.

8. Türmodulträger nach Anspruch 7, **dadurch gekennzeichnet, dass** mehrere zur Befestigung eines Funktionselementes (5) an der Trägerplatte (1) vorgesehene Befestigungsöffnungen (20) parallel zueinander verlaufen.

9. Türmodulträger nach Anspruch 7 oder 8, **dadurch gekennzeichnet, dass** die Schlitze (20) eine Komponente in vertikaler Richtung (z) aufweisen, wenn die Trägerplatte (1) an dem Türkörper (I) befestigt ist.

10. Türmodulträger nach Anspruch 9, **dadurch gekennzeichnet, dass** die Schlitze (20) an Befestigungsbereichen (2, 2', 2", 2"') vorgesehen sind bzw. mit Befestigungshaken versehenen Befestigungsbereichen zugeordnet sind, die an den in Fahrzeuglängsrichtung (x) voneinander beabstandeten Stirnseiten (11, 12) der Trägerplatte (1) von dieser abstehen.

11. Türmodulträger nach Anspruch 10, **dadurch gekennzeichnet, dass** zusätzliche Befestigungsbereiche (3) von der Unterkante (14) der Trägerplatte (1) abstehen, und zwar vorzugsweise winklig zu der durch die Trägerplatte (1) definierten Erstreckungsebene (E).

12. Türmodulträger nach einem der vorhergehenden Ansprüche, **dadurch gekennzeichnet, dass** an den zweiten Befestigungsstellen (20, 30) eine Türinnenverkleidung (5) befestigt ist.

13. Türmodulträger nach einem der vorhergehenden Ansprüche, **dadurch gekennzeichnet, dass** an den zweiten Befestigungsstellen wahlweise ein Airbagmodul, eine Beleuchtungseinheit, eine Lautsprechereinheit, ein Kabelstrang, ein Türgriff und/oder Teile eines Schließsystems befestigt sind.

14. Kraftfahrzeugtür mit einem Türmodulträger nach einem der vorhergehenden Ansprüche.

## Claims

1. Door module support for fixing on a door body between the wet space and dry space of a motor vehicle with
- a support plate (1) for holding functional elements of a vehicle door, e.g. a window lifter, a door lock, door handle and/or door inside trim,
- first fixing sites (16) on the support plate (1) which serve to fix the support plate on the door body wherein in the assembled state one surface of the support plate (1) faces the dry space (T) and the other surface of the support plate faces the wet space (N),
- a circumferential sealing profile (10) around the support plate (1) by which the support plate (1) fits sealingly against the door body in the assembled state, and
- second fixing sites (20, 30) on the support plate (1) which serve to fix at least one functional element (I) on the support plate and which are provided on the fixing areas (2, 2', 2", 2"', 3) which are formed on the support plate 1 outside of the section of same enclosed by the sealing profile (10) and which project into the dry space (T).
**characterised in that**
the second fixing sites (20, 30) are designed as receiving points for fastening hooks (50) directed to fastening openings.

2. Door module support according to claim 1, **characterised in that** fixing areas (2, 2') are provided which protrude away from the support plate (1) in the plane (E) defined by the support plate (1).

3. Door module support according to claim 1 or 2, **characterised in that** fixing areas (3) are provided which protrude from the support plate (1) at an angle, more particularly at a right angle to the plane (E) defined by the support plate (1).

4. Door module support according to one of the preceding claims, **characterised in that** fixing areas (2", 2"') are provided which are formed on the support plate (1) outside of the sealing profile (10) and are guided inwards over the support plate (1).

5. Door module support according to one of the preceding claims, **characterised in that** the second fixing sites (20, 30) provided on the fixing areas (2, 2', 2", 2"', 3) are formed by fixing openings.

6. Door module support according to one of claims 1 to 4, **characterised in that** the second fixing sites provided on the fixing areas are formed by fixing hooks which can be inserted into the fixing openings of a functional element (5) which is to be fixed on the support plate (1).

7. Door module support according to claim 6, **characterised in that** the fixing openings (20) are formed by slits into which the fixing hooks (5) can be inserted and in which the fixing hooks (50) can be displaced in the longitudinal direction (L) of the slits.

8. Door module support according to claim 7, **characterised in that** several fixing openings (20) provided for fixing a functional element (5) on the support plate (1) run parallel to each other.

9. Door module support according to claim 7 or 8, **characterised in that** the slits (20) have a component in a vertical direction (z) when the support plate (1) is fixed on the door body (1).

10. Door module support according to claim 9, **characterised in that** the slits (20) are provided on fixing areas (2, 2', 2", 2"'), or are associated with fixing areas provided with fixing hooks, which protrude from the support plate (1) on the end sides (11, 12) of same which are spaced from each other in the longitudinal direction (x) of the vehicle.

11. Door module support according to claim 10, **characterised in that** additional fixing areas (3) protrude from the lower edge (14) of the support plate (1), namely preferably at an angle to the extension plane (E) defined by the support plate (1).

12. Door module support according to one of the preceding claims, **characterised in that** a door inside trim (5) is fixed on the second fixing sites (20, 30).

13. Door module support according to one of the preceding claims, **characterised in that** an airbag module, a light unit, speaker unit, cable wiring, door handle and/or parts of a closing system are selectively fixed on the second fixing sites.

14. Motor vehicle door with a door module support according to one of the preceding claims.

## Revendications

1. Support pour module de portière destiné à être fixé sur un corps de porte entre l'espace humide et l'espace sec d'un véhicule automobile, comprenant :
- une plaque porteuse (1) pour recevoir des éléments fonctionnels d'une porte de véhicule, par exemple un lève-vitre, une serrure de porte, une poignée de porte et/ou un habillage intérieur de porte,
- des premiers emplacements de fixation (16) de la plaque porteuse (1), qui servent à la fixation de la plaque porteuse sur le corps de porte, de sorte qu'à l'état monté une surface de la plaque porteuse (1) est tournée vers l'espace sec (T) et l'autre surface de la plaque porteuse (1) est tournée vers l'espace humide (N),
- un profilé d'étanchement (10) périphérique sur la plaque porteuse (1) se place à l'état monté de façon étanche contre le corps de porte le long de la plaque porteuse (1), et
- des seconds emplacements de fixation (20, 30) de la plaque porteuse (1), qui servent à la fixation d'au moins un élément fonctionnel (I) sur la plaque porteuse (1) et qui sont prévus à des zones de fixation (2, 2', 2", 2"', 3), qui sont conformés sur le tronçon de la plaque porteuse (1) entouré par le profilé d'étanchement (10) à l'extérieur de ce tronçon, et qui font saillie dans l'espace sec (T),
**caractérisé en ce que** les seconds emplacements de fixation (20, 30) sont réalisés sous forme d'ouvertures de fixation ménagées pour recevoir des crochets de fixation (50).

2. Support pour module de portière selon la revendication 1, **caractérisé en ce qu'**il est prévu des zones de fixation (2, 2') qui dépassent depuis la plaque porteuse (1) dans le plan (E) défini par la plaque porteuse (1).

3. Support pour module de portière selon la revendication 1 ou 2, **caractérisé en ce qu'**il est prévu des zones de fixation (3) qui dépasse depuis la plaque porteuse (1) sous un angle, en particulier un angle droit, vers le plan (E) définit par la plaque porteuse (1).

4. Support pour module de portière selon l'une quelconque des revendications précédentes, **caractérisé en ce qu'**il est prévu des zones de fixation (2", 2"') qui sont conformées sur la plaque porteuse (1) à l'extérieur du profilé d'étanchement (10) et qui sont guidées vers l'intérieur via la plaque porteuse (1).

5. Support pour module de portière selon l'une quelconque des revendications précédentes, **caractérisé en ce que** les seconds emplacements de fixation (20, 30) prévus au niveau des zones de fixation (2, 2', 2", 2"', 3) sont formés par des ouvertures de fixation.

6. Support pour module de portière selon l'une quelconque des revendications 1 à 4, **caractérisé en ce que** les seconds emplacements de fixation prévus au niveau des zones de fixation sont formés par des crochets de fixation susceptibles d'être introduits dans des ouvertures de fixation d'un élément fonctionnel (5) à fixer sur la plaque porteuse (1).

7. Support pour module de portière selon la revendication 6, **caractérisé en ce que** les ouvertures de fixation (20) sont formées par des fentes dans lesquelles les crochets de fixation (5) sont susceptibles d'être introduits et dans lesquelles les crochets de fixation (50) peuvent être déplacés dans la direction longitudinale (L) des fentes.

8. Support pour module de portière selon la revendication 7, **caractérisé en ce que** plusieurs ouvertures de fixation (20) prévues sur la plaque porteuse (1) pour la fixation d'un élément fonctionnel (5) s'étendent parallèlement les unes aux autres.

9. Support pour module de portière selon la revendication 7 ou 8, **caractérisé en ce que** les fentes (20) comportent une composante en direction verticale (z) lorsque la plaque porteuse (1) est fixée sur le corps de porte (I).

10. Support pour module de portière selon la revendication 9, **caractérisé en ce que** les fentes (20) sont prévues au niveau de zones de fixation (2, 2', 2", 2"'), ou sont associées à des zones de fixation dotées de crochets de fixation, qui dépassent depuis la plaque porteuse (1) au niveau des faces frontales (11, 12) de cette dernière espacées l'une de l'autre dans la direction longitudinale (x) du véhicule.

11. Support pour module de portière selon la revendication 10, **caractérisé en ce que** des zones de fixation additionnelles (3) dépassent de l'arête inférieure (14) de la plaque porteuse (1), et cela de préférence sous un angle par rapport au plan d'extension (E) défini par la plaque porteuse (1).

12. Support pour module de portière selon l'une des revendications précédentes, **caractérisé en ce qu'**un habillage intérieur de porte (5) est fixé au second emplacement de fixation (20, 30).

13. Support pour module de portière selon l'une quelconque des revendications précédentes, **caractérisé en ce que**, au niveau des seconds emplacements de fixation, sont fixés au choix un module de coussin d'air, une unité d'éclairage, une unité à haut-parleurs, un faisceau de câble, une poignée de porte et/ou des parties d'un système de verrouillage.

14. Porte de véhicule comprenant un support de module de portière selon l'une quelconque des revendications précédentes.
